# EUROPEAN PATENT APPLICATION

(11) **EP 2 749 180 A1**
(43) Date of publication of application: **02.07.2014**
(21) Application number: 12008627.7
(22) Date of filing: 27.12.2012
(51) Int. Cl.: A23L 2/38, A23L 2/52, A23L 2/56, A23L 1/20

(54) **Method for preparing a soy based liquid food product containing cocoa and hazelnut and liquid food product thus obtained**

(71) Applicant: Liquats Vegetals SA, Girona (ES)
(72) Inventor: Erra Serrabasa, Josep M., 17430 Santa Coloma de Farners (Girona) (ES); Gol, Oriol, 17406 Viladrau (Girona) (ES)
(74) Representative: Juncosa Miro, Jaime

(57) **Abstract**

The invention relates to a method for obtaining a soy based liquid food product comprising cocoa and hazelnut and the liquid food product obtained by preparing a mixture with the following ingredients whole deshelled soy, water, and dry marine alga as a stabilizer, grinding the dry marine alga and the soy while preparing the mixture, with a controlled heat supply for their activation, so that said mixture produces a fluid paste from which, by centrifugation, a liquid part providing said food product is separated. The dry marine alga is obtained from a whole red alga selected from the group comprising at least one of the following algae genera: Chondrus, Gigartina, Eucheuma.

## Description

The present invention relates to a method for obtaining a cocoa-containing liquid food product and to a liquid food product obtained by means of the mentioned method.

The invention provides a drinkable liquid food product incorporating as components soy, cocoa and hazelnuts.

Several food products containing cocoa, some of them being drinkable liquids and others being in a solid form, are known in the state of the art, the drinkable products having in common the fact that they form a beverage known as "cocoa milk or chocolate or cocoa beverages". The benefit of cocoa antioxidants or cocoa polyphenol compounds are known and additional food products containing cocoa are being investigated. There is the need to provide an alternative to the state of the art processes and products by means of a novel method that is simple and economical to carry out and that results in a stable and palatable product with excellent nutritional properties.

This problem is solved by the present invention that provides a process of producing a soy beverage that enables to obtain a food product in the form of a drinkable liquid containing soy, hazelnut and cacao. The invention provides a novel cocoa beverage that combines the properties of soy beverages with the properties of hazelnuts and of cocoa polyphenol-containing products, concentrates or extracts to produce a novel beverage.

Hazelnuts are present in a finely ground condition and are most preferably obtained from whole hazelnuts; the hazelnuts can be ground with the soy beans or can be previously ground and then added to the ground soy, in which case, preferably, the hazelnuts are ground to provide a hazelnut paste.

According to an aspect of the invention, marine algae, i.e. seaweeds, are added to the beverage composition, preferably as dry marine algae, both as a stabilizer and a source of nutritional elements. Optionally, the beverage can further include vitamins, calcium or other minerals, energizing or stimulating ingredients, or mixtures thereof. The beverage further includes emulsifiers and stabilizers, in a known way.

Soy beverages which incorporate hazelnuts and cocoa are not known in the art.

In a first aspect, the present invention relates to a method for obtaining a soy-based drinkable liquid food product, in particular a beverage, from the following ingredients:
- deshelled soy,
- water,
- cocoa and
- deshelled hazelnuts

The method comprises a first step of:
a) preparing a first mixture containing soy and water.

In this step the soy may be already crushed or may be crushed in the presence of water while preparing said first mixture; the obtained mixture is treated by the following steps:
b) heating the mixture;
c) homogenizing said mixture to obtain a fluid paste;
d) separating from the paste obtained at step c) a liquid part to be used in the final beverage.

The invention method is **characterized in that** it further comprises the following steps:
e) preparing a second mixture by adding cocoa or cocoa-containing products to the separated liquid part of said first mixture obtained at step d);
f) adding hazelnuts to said first or second mixture.

Optionally, the soy may be ground in the presence of enzymes for obtaining some digestible sugars after modifiying other non digestible sugars such as raffinose and stachiose naturally presents in the soybeans. Suitable enzymes are known in the art and are e.g. amylases, alfa-amylases, glucosidases, amyloglucosidases and similar.

If, according to an exemplary embodiment, the hazelnuts are added to the first mixture, they may be already ground or may be ground together with the soy beans while preparing said first mixture; in another exemplary embodiment of the invention, ground hazelnuts are added to the second mixture, preferably in paste form.

In both cases the addition results in providing a drinkable liquid containing soy-derived products, hazelnut-derived products and cocoa; the wording soy-derived and hazelnut-derived are used to define the products that are obtained by treating soy and hazelnuts as above discussed, in particular, the beverage will contain soy fibers, fats and proteins, hazelnut fibers, fats and proteins, cocoa and/or cocoa containing products. Hazelnut's paste is considered a hazelnut-derived product.

Preferably, an emulsifier, e.g. a lecithin, is added to said first or second mixture.

The amounts of starting materials are as follows (percent by weight on the total final drink composition).
- Soy (de-shelled): 10% - 20%,
- Hazelnuts: 1%-5%, preferably 2.5%-4%,
- Cocoa: 0.5%-2.5%, preferably 1.0%-2%
- water enough to top up the components to 100% by weight.

If present, dry marine algae are preferably provided in an amount of 0.01-0.15%.

Different ingredients such as calcium salts or other minerals, sugars, sweeteners, vitamins, soluble cereals, coffee, emulsifiers and stabilizers which can comprise from 0 to 5% of the total weight of the composition, can be added to this liquid part.

The water, and crushed soy and hazelnuts, if the hazelnuts have been added to the first mixture, are heated to a temperature that is preferably within the range of 60 to 95 °C, preferably 75 to 95°C, so that said mixture produces a fluid paste containing both soluble and insoluble proteins. The mentioned heat supply to the described process for preparing the mixture is carried out in a preferred embodiment by using hot water at a temperature of 60-95°C. Preferably soy and hazelnuts (if present) are wet ground together in water at the above mentioned temperature to provide a paste. If marine algae, i.e. seaweeds, are present, they are preferably treated together with soy and hazelnuts and subjected together to the same process steps.

In the preferred embodiment, the heating is carried out for a time within the range of 2 to 5 minutes. The obtained mixture is then homogenized and from the resulting homogenized fluid paste a first part, a thick paste containing the insoluble proteins, is separated in a way known in the art, leaving a second liquid part providing said food product in a liquid form.

Homogenization is carried out before separation, preferably at a pressure within 180 to 400 bar, most preferably the range of 185 to 215 bars. The separation is preferably carried out by centrifugation, in a decanter: the solids are retained in the decanter and the liquid exits the decanter upon centrifugation. Hazelnuts are either raw or toasted (thermally treated), or a combination of both.

The dry marine alga is obtained from a whole alga, preferably being one or more of a red alga of the genus Chondrus, species Chrondus Crispus, a red alga of the genus Gigartina, e.g Gigartina mammillosa and Gigartina acicularis, or a red alga of the genus Eucheuma, depending on the embodiment.

No soaking of the soybeans is required or carried out if they are ground and crushed directly in the hot water, by wet grinding. As mentioned, the hazelnuts may be ground and crushed together with the soybeans, but a separate grinding step can be carried out.

In an exemplary embodiment, the soya and the hazelnuts are thermally treated together, in water at the required temperature; during the thermal treatment, the hazelnuts will release into the water mixture the following products: proteins, fibers, calcium, vitamins, aminoacids, fats, in particular unsaturated fatty acids, fitosterols, copper and other minerals, in particular Ca, P, Mg and K.

In another exemplary embodiment of the method of the invention, the hazelnuts are ground separately and the ground hazelnut, generally in the form of a paste, is added to the liquid product obtained at step d) together with cocoa, to prepare the said second mixture.

An homogenization step is carried out on the ground soy before the centrifugation and separation steps.

According to an embodiment of the present invention, at least one homogenization step is carried out on a mixture comprising:
- ground soy de-shelled, i.e. dehulled, 10 to 20% by weight with respect to the total mixture,
- ground hazelnuts between 1 and 5% by weight with respect to the total mixture
- cocoa or cocoa-containing products (e.g. chocolate) 0.5 to 2.0% by weight of the total mixture,
- additional ingredients such as calcium salts or other minerals, sugars, sweeteners, vitamins, soluble cereals, coffee, emulsifiers and stabilizers from 0 to 5% of the total weight of the composition, and
- water enough to top up the remaining components to 100% by weight.

Preferably, the amount of said additional ingredients is 0.1 -0,8% by weight of the dry matter content of the final product.

In a second aspect, the invention provides a cocoa liquid food product, as obtainable with the above mentioned process, containing a soy beverage, hazelnut derived products and cocoa.

In an exemplary embodiment, the liquid food product comprises:
- 1 % to 5% by weight of hazelnut derivatives,
- 0.5 to 2.0% by weight of cocoa and/or cocoa containing products
- optionally 0.01 to 0.12% by weight of soluble products from dry marine algae, and
- water up to 100% by weight.

More specifically, the liquid product is a water composition comprising soya and hazelnuts proteins and fats, in which the soya and the hazelnut fats are dispersed in the form of an emulsion.

The drinkable food product object of the present invention can be further added with at least one additional ingredient of the group consisting of the following ingredients: calcium salts or other minerals and vitamins in a ratio of up to 0.5% of the total weight of dry matter; and soluble cereals, sugars, sweeteners, coffee, or a combination thereof comprising 0.1-15% of the total weight of dry matter.

Other features and advantages of the invention will be observed in the description of examples which are detailed below by way of a non-limiting explanation with reference to the enclosed non-limiting figures where:
Fig. 1 is a flow chart showing preparation of a cocoa, hazelnut and soy beverage from hazelnut paste; and
Fig. 2 is a flow chart showing preparation of a cocoa, hazelnut and soy beverage from whole beans and nuts.

### Example 1. Preparation of a cocoa, hazelnut and soy beverage from whole soy beans and hazelnut paste.

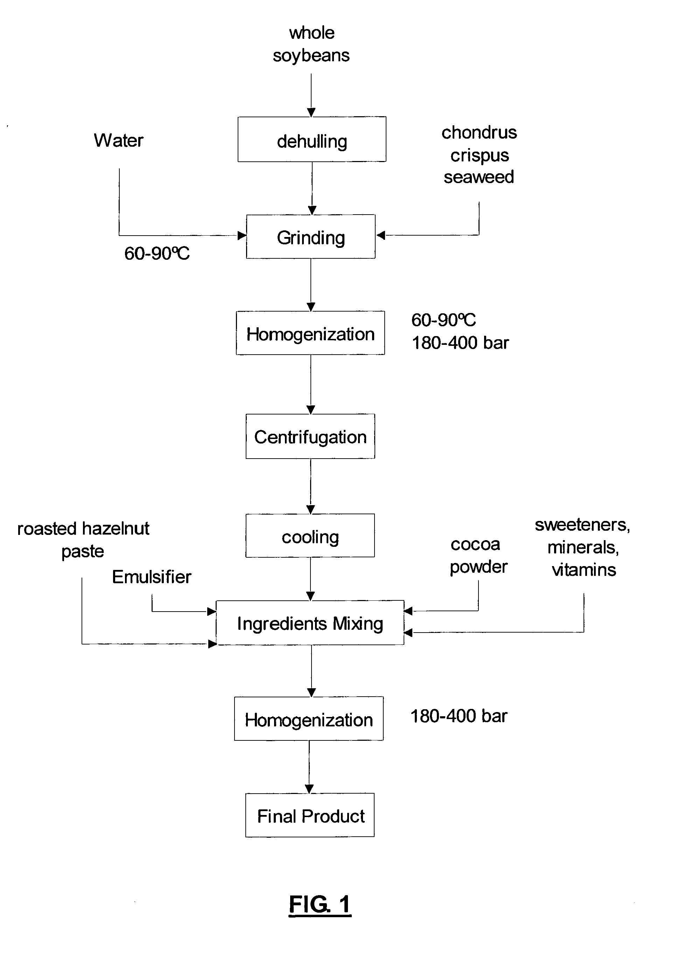

*The flow chart of this preparation is shown in* *Fig.1**. In the preparation, whole soy beans are de-shelled and wet ground in water at a temperature of 60-95°C preferably at 75-95°C. Seaweed, namely chondrus crispus, is added to the beans and ground with them.*

*The resulting hot fluid paste is homogenized at the same temperature of the grinding step or in any case at a temperature of at least 60°C and at a pressure of 180-400 bar. Following this step the paste is centrifugated, the liquid portion containing emulsified fats and soluble protein is separated, cooled and fed to a mixer.*

*To the liquid portion in the mixer are added hazelnut paste, cocoa powder, emulsifiers, e.g. lecithin, and (optionally) sweeteners, minerals, vitamins and similar additional ingredients. If necessary water is added to reach the required fluidity of the product. This mixture is then subjected to another homogenization step at 180-400 bar and is subsequently filtered and treated for final packaging, usually including UHT treatment. The final product has an excellent taste and there is no or very limited sedimentation of the components of the hazelnut paste in the final package.*

*In an exemplary embodiment the following amounts are used:*
*120 to 140 kg of soy beans with* 835 *to 815 liters of water in the first step*
*0, 3 to 0, 4 kg of seaweed*
*30 kg of hazelnut paste*
*15 kg of cocoa powder*

### Example 2. Preparation of a cocoa, hazelnut and soy beverage from soy and hazelnut nuts.

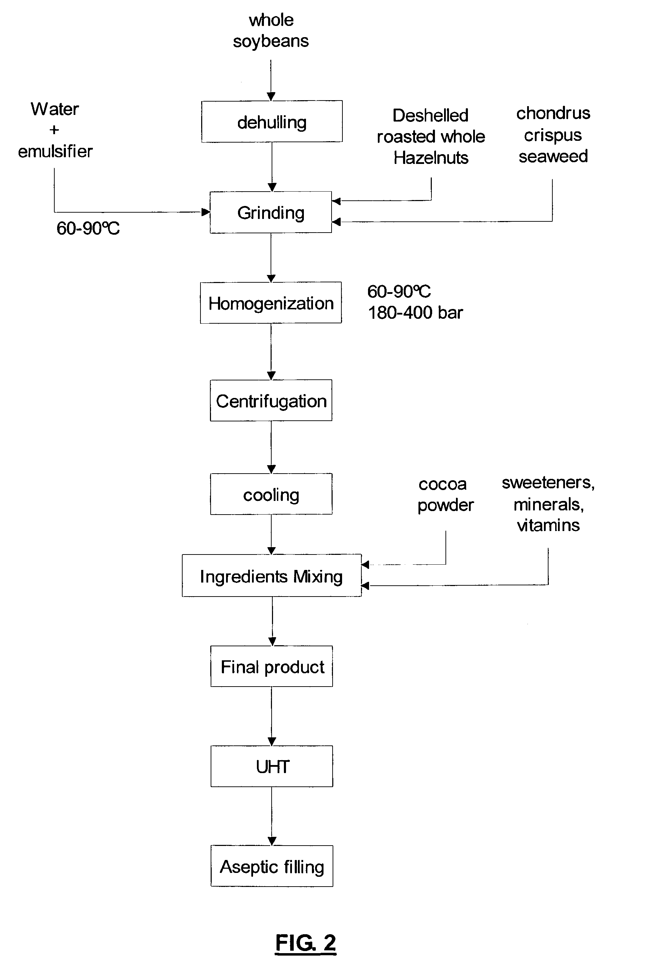

*The flow chart of this preparation is shown in* *Fig.2**. In the preparation, whole soy beans are de-shelled and wet ground in water together with deshelled hazelnuts, usually roasted hazelnuts, at a temperature of 60-95°C preferably at 75-95°C. Seaweed, namely chondrus crispus, is added to the beans and ground with them.*

*The resulting hot fluid paste is homogenized at the same temperature of the grinding step or in any case at a temperature of at least 60°C and at a pressure of 180-400 bar. Following this step the paste is centrifugated, the liquid portion containing emulsified fats and soluble proteins is separated cooled and fed to a mixer.*

*To the liquid portion in the mixer are added cocoa powder emulsifiers, e.g. lecithin, and (optionally) sweeteners, minerals, vitamins and similar additional ingredients. If necessary water is added to reach the required fluidity of the product. This mixture is then subjected to another homogenization step at 180-400 bar and is subsequently filtered and treated for final packaging, usually including UHT treatment. The final product has an excellent taste and there is no or very limited sedimentation of the components of the hazelnut paste in the final package.*

*In an exemplary embodiment the following amounts are used:*
*120 to 140 kg of dehulled soy beans*
*832 to 810 liters of water*
*33 to* 35 *kg of deshelled hazelnut nuts*
*0, 3 to 0, 4 kg of seaweed*
*15 kg of cocoa powder.*

As *above seen, the amount of hazelnut paste to soy beans is in the range of 1:4 to 1:4,67 and the ratio of hazelnut nuts to soy beans is in the range of 1:3, 63 to 1:4.*

A person skilled in the art may introduce changes and modifications in the described embodiments without departing from the scope of the invention as it is defined in the attached claims.

## Claims

1. A method for obtaining a soya-based drinkable liquid food product, **characterized in that** it comprises the steps of:
a) preparing a first mixture with the following ingredients:
- soy,
- water,
wherein said soy is already crushed or is crushed while preparing said first mixture, and treating said first mixture by:
b) heating the ground mixture;
c) homogenizing said mixture to obtain a fluid paste;
d) separating a liquid part to be used in the final beverage from the paste obtained at step c);
**characterized in that** it further comprises the following steps:
e) preparing a second mixture by adding cocoa or cocoa-containing products to the separated liquid part of said first mixture obtained at step d);
f) adding hazelnuts to said first or second mixture, said hazelnuts being already crushed or are crushed while preparing said first mixture or are in paste form, to provide a drinkable liquid containing soy-derived products, hazelnut-derived products, cocoa.and/or cocoa products.

2. A method according to claim 1 wherein cocoa or cocoa-containing products is added in a range of 0.5 to 2.0% by weight of the total weight of the second mixture.

3. A method according to claim 1 or 2, wherein lecityn is added to said first or second mixture.

4. A method according to any claim 1 to 3, wherein hazelnuts are added to said first mixture and said separation of a liquid part from a fluid paste is carried out on a paste that contains ground hazelnuts.

5. A method according to any claim 1 to 3, wherein ground hazelnuts are added as a paste to said second mixture

6. A method according to any previous claim, wherein dry marine algae are treated together with said soy in said first mixture preparation.

7. A method according to any claims 2 to 6, wherein at least one homogenization step is carried out on a mixture comprising:
- ground soy de-shelled, i.e. de-hulled, in a range of 10 to 20% by weight with respect to the total mixture ,
- ground hazelnuts in a range of 1 and 5% by weight with respect to the total mixture,
- optionally marine algae in a range of 0.01 and 0.15% of the total weight of the composition, and
- water enough to reach 100% by weight.

8. A method according to any claim 1 to 6, wherein at least one homogenization step d) is carried out on a mixture comprising:
- ground soy de-shelled, i.e. de-hulled, in a range of 10 to 20% by weight with respect to the total mixture ,
- optionally marine algae in a range of 0.01 and 0.15% of the total weight of the composition, and
- water enough to reach 100% by weight
and wherein an amount of ground hazelnuts in a range of 1% to 5% by weight with respect to the total final mixture is added to said second mixture.

9. A method according to claim 7 or 8, further comprising the step of adding to the at least one additional ingredient from the group consisting of calcium or other minerals, salts, sugars, sweeteners, vitamins, soluble cereals, coffee, emulsifiers and stabilizers, or a combination thereof, in a range of 0 to 5% of the total weight of the second mixture.

10. The method according to claim 9, wherein said ingredients are 0.1 -0,8% by weight of the total weight of the dry matter in the final beverage composition.

11. A method according to any claim 1 to 7, comprising the following steps:
- grinding together soy beans and hazelnuts in a mill, in the presence of water, said water being heated to a temperature of 60 to 90°C for at least part of the grinding time,
- homogenizing said mixture;
- separating from the homogenized mixture a liquid part to provide a liquid beverage;
- preparing a second mixture by adding cocoa or cocoa containing products to said liquid part separated from said mixture of ground soy and hazelnut.

12. A method according to any previous claim, wherein said cocoa is cocoa powder.

13. A method according to claim 1 or 2 wherein enzymes for transforming the soy's non digestible sugars suchs as stachiose and raffinose, into digestible sugars are added to said first mixture.

14. An intermediate for producing a liquid food product as obtainable through a process according to any claim 1 to 13, **characterized in that** it comprises:
- ground soy de-shelled, i.e. de-hulled, in a range of 10 to 20% by weight with respect to the total mixture;
- ground hazelnuts in a range of 1 and 5% by weight with respect to the total mixture;
- an emulsifier;
- optionally marine algae in a range of 0.01 and 0.15% of the total weight of the composition, and
- water enough to reach 100% by weight.

15. A liquid food product as obtainable through a process according to any claim 1 to 13, **characterized in that** it comprises a soy beverage, hazelnuts and cocoa.

16. A liquid food product according to claim 15, further comprising products deriving from marine algae, including one or more of the following: soluble fibers including carragenins and natural occurring stabilizer, calcium, vitamins, proteins, fatty acids, sterols, high quality proteins, magnesium, iodine, iron, phosphorus, sodium.

17. The liquid food product according to claim 15 or 16, wherein the granulometry of the solid particles therein contained is within the range of 2 to 10 pm.
